# EUROPÄISCHE PATENTSCHRIFT

(11) **EP 0 543 389 B1**
(45) Veröffentlichungstag und Bekanntmachung des Hinweises auf die Patenterteilung: **22.05.1996**
(21) Anmeldenummer: 92119768.7
(22) Anmeldetag: 20.11.1992
(51) Int. Cl.: B62D 61/10, B62D 49/06

(54) **Selbstfahrendes landwirtschaftliches dreiachsiges Schlepperfahrzeug**
Self-propelled agricultural tractor with three axles
Tracteur agricole automoteur à trois essieux

(30) Priorität: 22.11.1991 DE 4138502
(43) Veröffentlichungstag der Anmeldung: 26.05.1993
(73) Patentinhaber: Horsch Maschinen GmbH, D-92421 Schwandorf (DE)
(72) Erfinder: Horsch, Michael, 8460 Schwandorf (DE)
(74) Vertreter: Wasmeier, Alfons, Dipl.-Ing.

(56) Entgegenhaltungen:
- EP-A- 0 089 910
- DE-U- 9 109 012
- FR-A- 2 342 197
- GB-A- 2 093 415

## Beschreibung

Die Erfindung betrifft ein selbstfahrendes landwirtschaftliches, dreiachsiges Schlepperfahrzeug nach dem Oberbegriff des Anspruches 1.

Die Erfindung stellt eine Verbesserung und Weiterentwicklung eines Schlepperfahrzeuges nach der DE-OS 35 11 647 der Anmelderin dar, mit der ein dreirädriges Schlepperfahrzeug unter Schutz gestellt wird. Derartige dreirädrige Schlepperfahrzeuge haben sich im praktischen Betrieb seit Jahren ausgezeichnet bewährt und sind vielseitig anwendbar. Da jedoch der Trend in der Landwirtschaft nach noch leistungsfähigeren Fahrzeugen geht, insbesondere nach Fahrzeugen, die höhere Belastungen (z.B. im aufgesattelten Bunker oder auf der Ladefläche) aufnehmen können, stellt sich das Problem, die höhere Gewichtsbelastung durch eine zusätzliche tragende Achse aufzunehmen und ein dreiachsiges Fahrzeug zu entwickeln.

Aus der DE-U-91 09 012 ist ein selbstfahrendes dreiachsiges Schlepperfahrzeug bekannt, dessen Vorderachse ein mittleres, gelenktes Rad, dessen Mittelachse zwei gelenkte Räder und dessen Hinterachse ebenfalls zwei gelenkte Räder aufnimmt, wobei die Räder mit überbreiten Reifen bestückt sind und die Gesamtbreite des Fahrzeuges etwa gleich der dreifachen Reifenbreite ist. Das gelenkte Vorderrad ist gegenüber der Fahrzeuglängsachse drehbar angeordnet, und der Fahrzeugrahmen hat im Bereich der Mittel- und Hinterachse eine Breite, die wesentlich kleiner ist als der Abstand der beiden Mittelräder bzw. Hinterräder voneinander.

Das Problem, das mit der Erfindung gelöst werden soll, besteht gegenüber herkömmlichen und bekannten Dreiachs-Fahrzeugen darin, daß bei den bekannten Anordnungen der Rahmen relativ hoch gelegt sein muß und damit der Schwerpunkt des Fahrzeuges in beladenem Zustand unerwünscht hoch wird. Bei herkömmlichen Aufsattelfahrzeugen läßt sich nicht vermeiden, daß die Unterkante Rahmen höher liegt als die Oberkante der Reifen, damit die Räder unter dem Rahmen aufgenommen und gedreht werden können. Ferner ist bei entsprechenden bekannten Anordnungen das Pendeln und Lenken der einzelnen Räder wegen des Platzbedarfes extrem schwierig zu erreichen.

Aufgabe der Erfindung ist es, ein Schlepperfahrzeug der gattungsgemäßen Art so weiter zu entwickeln, daß eine möglichst niedrige und kompakte Bauweise des Fahrzeuges bzw. des Fahrzeugrahmens erzielt wird, daß eine einfache und unkomplizierte mechanische Antriebsverbindung zwischen der Mittelachse und der Hinterachse erreicht wird, und daß eine einwandfreie Pendelung und Lenkung bei minimalem Platzbedarf gewährleistet ist.

Diese Aufgabe wird gemäß der Erfindung mit den Merkmalen des Kennzeichens des Anspruches 1 gelöst. Weitere Ausgestaltungen der Erfindung sind Gegenstand der Unteransprüche.

Insbesondere wird mit der Erfindung ein dreiachsiges Fahrzeug der gattungsgemäßen Art vorgeschlagen, bei dem der schmale Rahmen, insbes. ein Wespentaillenrahmen oder ein Zentralrohrrahmen, einen geringeren Abstand zum Boden aufweisen kann als der Höhe der Räder des Fahrzeugs entspricht, daß der Achsabstand zwischen Hinterachse und Mittelachse extrem kurz gewählt werden kann, daß zwischen Mittelachse und Hinterachse eine mechanische Antriebsverbindung, vorzugsweise in Form einer Gelenkwelle, eingesetzt werden kann, durch die beide Achsen angetrieben sind, und daß insgesamt das Schlepperfahrzeug extrem wendig und einfach lenkbar ausgebildet ist.

Die Vorderachse kann als Einzelrad ausgebildet sein, etwa in der Weise, wie dies in der DE-A-35 11 647 oder der DE-U-91 09 012 dargestellt und beschrieben ist; wahlweise kann die Vorderachse ebenso wie die Mittel- und die Hinterachse mit zwei gelenkten Rädern ausgebildet sein. Die beiden Räder der Hinterachse sind gelenkig ausgebildet, die Räder der Vorderachse können gelenkt oder ungelenkt ausgeführt sein. Die Anordnung kann in weiterer Ausgestaltung der Erfindung auch so gewählt werden, daß die beiden Mittelräder gelenkt ausgeführt und die Hinterräder wahlweise gelenkt oder ungelenkt ausgebildet sind.

Anstatt die Hinterachse pendelnd und die Mittelachse starr anzuordnen, wird bei einer anderen Ausführungsform der Erfindung die Hinterachse starr und die Mittelachse pendelnd ausgebildet.

In weiterer Ausgestaltung der Erfindung ist nach dem kennzeichnenden Teil des Anspruches 9 das gattungsgemäße selbstfahrende Schlepperfahrzeug so ausgebildet, daß anstelle des über der Mittelachse angeordneten horizontalen Querlagers Mittelachse und Hinterachse gemeinsam gelenkig am Fahrzeugrahmen in einer horizontalen Querachse so schwenkbar gelagert sind, daß bei Absenkung der einen Achse die andere Achse in gleichem oder unterschiedlichem Maß (entsprechend der Lage des Querlagers relativ zur Mittel- und Hinterachse) angehoben wird. Hierzu ist das Querlager entweder in die Antriebsverbindung der Mittel- und Hinterachse eingesetzt und über einen Lagerbock mit dem Fahrzeugrahmen verbunden, also am Fahrzeugrahmen aufgehängt, oder aber als Querlager unmittelbar am Fahrzeugrahmen befestigt und mit der Mittel- und Hinterachse bzw. dem vorderen und hinteren Bereich der Antriebsverbindung befestigt. Bei dieser Ausführungsform sind alle Räder der Mittelachse und der Hinterachse vorzugsweise gelenkig ausgebildet.

Nachstehend wird die Erfindung in Verbindung mit der Zeichnung anhand eines Ausführungsbeispieles erläutert. Es zeigt:
- Fig. 1: eine schematische Darstellung des Prinzips nach der Erfindung, in Seitenansicht,
- Fig. 2: eine schematische Aufsicht auf die Anordnung nach Fig. 1, in Aufsicht
- Fig. 3: eine schematische Darstellung des Prinzips nach der Erfindung in einer anderen Ausführungsform der Erfindung, in Seitenansicht, und
- Fig. 4: eine schematische Aufsicht auf die Anordnung nach Fig. 3, in Aufsicht.

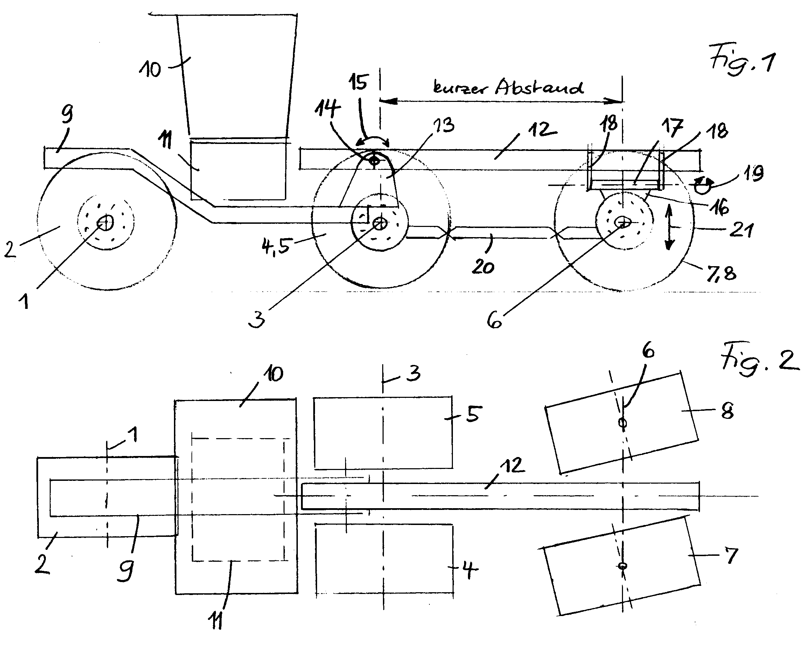

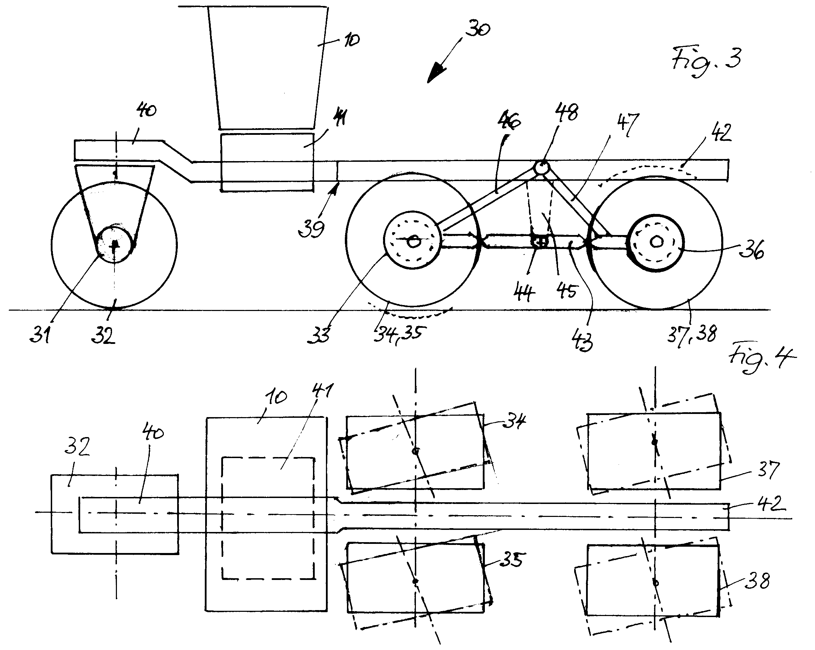

Das Schlepperfahrzeug besitzt eine Vorderachse 1 mit einem einzigen, mittigen Rad 2 (oder wahlweise zwei Außenrädern 2, 2), eine Mittelachse 3 mit Rädern 4, 5 und eine Hinterachse 6 mit Rädern 7, 8. 9 ist der Vorderrahmen (Schwinge bei einem einzigen Vorderrad) des Fahrzeuges, 10 die Fahrerkabine, 11 die Motor-Getriebe-Einheit. Der eigentliche Fahrzeugrahmen ist mit 12 dargestellt. Dieser Rahmen liegt tiefer als die Oberkante der Räder 4, 5 und 7, 8, und ist ein Wespentaillenrahmen oder Zentralrohrrahmen, wie sich aus Fig. 2 ergibt. Zwischen dem Rahmenteil 9 und dem Fahrzeugrahmen 12 sowie der Mittelachse 3 ist ein Verbindungsträger 13 angeordnet, der den Rahmen 12 in einem horizontalen Querlager 14 aufnimmt, so daß damit eine durch Doppelpfeil 15 angedeutete Drehung um die Lagerstelle 14 ermöglicht wird. Die Achse des Querlagers 14 ist dabei aus Gründen der besseren Gewichtsverteilung in Richtung zur Fahrerkabine 10 bzw. zur Vorderachse 1 gegenüber der Mittelachse 3 versetzt bzw. verschoben angeordet.

Mit der Hinterachse 6 sind Träger 16 mit Längslagern 17 befestigt, die über Tragarme 18 mit dem Fahrzeugrahmen 12 fest verbunden sind. Die Lagerstellen 17 sind horizontal mit ihren Achsen in Fahrzeuglängsachse verlaufend ausgebildet, so daß Drehungen in Richtung des Pfeiles 19 ermöglicht werden. Mit 20 ist eine Antriebsverbindung zwischen den Achsen 3 und 6 angedeutet. Diese Verbindung ist vorzugsweise eine Gelenkwelle. Ein vertikaler Doppelpfeil 21 gibt die Möglichkeit der Auf- und Abbewegung der jeweiligen Hinterräder 7, 8 an.

Bei der Ausführungsform nach den Figuren 3 und 4 hat das Schlepperfahrzeug 30 eine Vorderachse 31 mit einem einzigen, mittigen Rad 32 (oder wahlweise zwei Rädern 32, 32), eine Mittelachse 33 mit Rädern 34, 35 und eine Hinterachse 36 mit Rädern 37, 38. Der durchgehende Rahmen des Fahrzeuges 30 ist mit 39 bezeichnet; er ist im vorderen Bereich als Schwinge 40 (bei nur einem Vorderrad 32) ausgebildet und geht hinter der Motor-Getriebeeinheit 41 in den mittleren und hinteren Teil als Geräteaufnahmerahmen 42 über, der ein Zentralrohrrahmen oder Wespentaillenrahmen ist. Mittelachse 33 und Hinterachse 36 sind über eine Antriebsverbindung 43 miteinander antriebsmäßig gekoppelt. Bei einer speziellen Variante ist ein Querlager 44 in die Antriebsverbindung 43 eingesetzt (entweder mittig oder außermittig); dieses Querlager 44 ist in einem am Rahmen 42 starr befestigten Lagerbock 45 aufgenommen, so daß die Achsen 33 und 36 sowie die zugehörigen Räder 34, 35 und 37, 38 um die Lagerstelle 44 schwenkbar angeordnet sind, d.h. die Achse 33 sich nach unten und die Achse 36 entsprechend nach oben bewegen kann; das Ausmaß dieser Bewegungen ist durch das gewählte Übersetzungsverhältnis bestimmbar. Bei einer anderen Variante ist das Querlager 48 unmittelbar im Rahmen 42 angebracht, und die Achsen 33, 36 bzw. die jeweiligen Enden der Antriebsverbindung 33 sind über Träger 46, 47 mit dem Querlager 48 verbunden. Damit können auch bei dieser Variante die Achsen 33 und 36 zueinander entgegengesetzte Höhenbewegungen um das Lager 48 ausführen. Die Räder 34, 35, 37, 38 sind lenkbar ausgeführt, und die beiden Achsen 32, 33 sind zueinander diagonal ausgleichbar, also z.B. pendelnd, angeordnet.

## Patentansprüche

1. Selbstfahrendes landwirtschaftliches, dreiachsiges Schlepperfahrzeug, dessen Vorderachse (1) ein mittleres, gelenktes Rad (2), dessen Mittelachse (3) zwei Räder (4, 5) und dessen Hinterachse (6) zwei Räder (7, 8) aufnimmt, wobei die Räder (2; 4, 5; 7,8) mit überbreiten Reifen bestückt sind und die Breite des Fahrzeuges etwa gleich der dreifachen Reifenbreite ist, wobei das Vorderrad (2) als gelenktes Rad ausgebildet um maximal 90° nach links und nach rechts gegenüber der Fahrzeuglängsachse drehbar angeordnet ist, das gelenkte Rad (2) in einer Schwinge (9) einseitig gelagert ist, und der Fahrzeugrahmen (9, 12) im Bereich der Mittel- und Hinterachse (3, 6) mit einer Breite ausgebildet ist, die wesentlich kleiner als der Abstand der beiden Mittelräder bzw. Hinterräder (3-4, 7-8) voneinander ist, und wobei die Hinterachse (6) zwei gelenkte Räder (7, 8) und die Mittelachse (3) zwei gelenkte oder wahlweise ungelenkte Räder (4, 5) mit überbreiten Reifen aufweist,
**dadurch gekennzeichnet,** daß
(a) die Hinterachse (6) und die Mittelachse (3) über eine mechanische Antriebsvorrichtung (20) miteinander gekoppelt sind,
(b) ein als Zentralrohrrahmen ausgebildeter Geräteaufnahmerahmen (12) sich durchgehend von einem Bereich vor den Mittelrädern (4, 5) bis über die Hinterräder (7, 8) erstreckt,
(c) der Geräteaufnahmerahmen (12) mittels eines horizontalen Querlagers (14) schwenkbar mit der Mittelachse (3) verbunden ist, und
(d) das horizontale Querlager (14) über der Mittelachse (3) angeordnet und fest mit dem Geräteaufnahmerahmen (12) verbunden ist.

2. Selbstfahrendes Schlepperfahrzeug nach Anspruch 1, dadurch gekennzeichnet, daß der Geräteaufnahmerahmen (12) mittels horizontaler Längslager (17) um die Hinterachse (6) kippbar angeordnet ist.

3. Selbstfahrendes Schlepperfahrzeug nach Anspruch 1, dadurch gekennzeichnet, daß der Geräteaufnahmerahmen (12) starr mit der Hinterachse (6) verbunden ist.

4. Selbstfahrendes Schlepperfahrzeug nach Anspruch 1, dadurch gekennzeichnet, daß das horizontale Querlager (14) in Richtung zur Vorderachse (1) gegenüber der Mittelachse (3) versetzt angeordnet ist.

5. Selbstfahrendes Schlepperfahrzeug nach Anspruch 1, dadurch gekennzeichnet, daß anstelle eines einzigen, gelenkten, mittleren Vorderrades (2) die Vorderachse (1) zwei lenkbare Außenräder (2, 2) aufweist, und daß die Mittelachse starr ausgebildet ist.

6. Selbstfahrendes Schlepperfahrzeug nach einem der vorausgehenden Ansprüche, dadurch gekennzeichnet, daß die Höhe des Zentralrohrrahmens (12) geringer ist als die Höhe der Fahrzeugräder (4, 5, 7, 8).

7. Selbstfahrendes Schlepperfahrzeug nach einem der vorausgehenden Ansprüche, dadurch gekennzeichnet, daß die mechanische Antriebsverbindung (20) zwischen Mittelachse (3) und Hinterachse (6) als mechanische Gelenkwelle ausgebildet ist.

8. Selbstfahrendes Schlepperfahrzeug nach Anspruch 1, dadurch gekennzeichnet, daß die Mittelachse (3) pendelnd und die Hinterachse starr ausgebildet ist.

9. Selbstfahrendes landwirtschaftliches, dreiachsiges Schlepperfahrzeug, dessen Vorderachse (31) ein mittleres, gelenktes Rad (32), dessen Mittelachse (33) zwei Räder (34, 35) und dessen Hinterachse (36) zwei Räder (37, 38) aufnimmt, wobei die Räder mit überbreiten Reifen bestückt sind und die Breite des Fahrzeuges etwa gleich der dreifachen Reifenbreite ist, wobei das Vorderrad (32) als gelenktes Rad ausgebildet um maximal 90° nach links und nach rechts gegenüber der Fahrzeuglängsachse drehbar angeordnet ist, das gelenkte Rad (32) in einer Schwinge (40) einseitig gelagert ist, und der Fahrzeugrahmen (42) im Bereich der Mittel- und Hinterachse (33, 36) mit einer Breite ausgebildet ist, die wesentlich kleiner als der Abstand der beiden Mittelräder bzw. Hinterräder voneinander ist, und wobei die Hinterachse (36) und die Mittelachse (33) jeweils gelenkte Räder (37, 38, 34, 35) aufweisen,
dadurch gekennzeichnet, daß
(a) die Hinterachse (36) und die Mittelachse (33) über eine mechanische Antriebsverbindung (43) miteinander gekoppelt sind,
(b) der Rahmen (39) durchgehend starr ausgebildet ist, und
(c) Mittelachse und Hinterachse gemeinsam am Geräteaufnahmerahmen (42) über ein horizontales Querlager (44; 48) relativ zueinander schwenkbar gelagert sind.

10. Selbstfahrendes Schlepperfahrzeug nach Anspruch 9, dadurch gekennzeichnet, daß das Querlager (44) in der mechanischen Verbindung (43) zwischen Mittel- und Hinterachse (33, 36) angeordnet und über einen Lagerbock (45) mit dem Geräteaufnahmerahmen (42) befestigt ist, und daß die Mittel- und die Hinterachse (33, 36) über das Querlager (44) relativ zueinander schwenkbar am Geräteaufnahmerahmen (42) gelagert sind.

11. Selbstfahrendes Schlepperfahrzeug nach Anspruch 9, dadurch gekennzeichnet, daß die Räder (34, 35, 37, 38) der Mittelachse (33) und der Hinterachse (36) diagonal ausgleichbar, z.B. pendelnd angeordnet sind.

## Claims

1. Self-propelled agricultural tractor vehicle with three axles, the front axle (1) being provided with a central steered wheel (2), the middle axle (3) being provided with two wheels (4, 5) and the rear axle (6) being provided with two wheels (7, 8), whereby the wheels (2; 4, 5; 7, 8) are provided with superwide tires and the width of the vehicle is approx. three times the width of one tire, whereby the front wheel (2) is a steered wheel, which is pivotable to the left and to the right in view of the longitudinal axis of the vehicle, the steered wheel (2) is supported one sided in a rocker arm (9), and the vehicle frame (9, 12) around the middle and the rear axles (3, 6) is of a width substantially smaller than the distance of the two middle wheels resp. rear wheels (3, 4; 7, 8) from each other, and whereby the rear axle (6) has two steered wheels (7, 8) and the middle axis (3) has two steered or alternatively unsteered wheels (4, 5) with superwide tires,
**characterised in** that
(a) the rear axle (6) and the middle axle (3) are coupled with each other by mechanical drive means (20),
(b) an equipment supporting frame (12) is designed as a central tubular frame which extends continuously from an area in front of the middle wheels (4, 5) beyond the rear wheels (7, 8),
(c) the equipment supporting frame (12) is tiltingly connected to the middle axis (3) by means of a horizontal radial bearing (14), and
(d) the horizontal radial bearing (14) is arranged above the middle axle (3) and is fixedly connected with the equipment supporting frame (12).

2. Self-propelling tractor vehicle according to claim 1, characterised in that the equipment supporting frame (12) is arranged tiltable about the rear axis (6) by means of a horizontal thrust bearing (17).

3. Self propelling tractor vehicle according to claim 1, characterised in that the equipment supporting frame (12) is rigidly connected with the rear axis (6).

4. Self propelling tractor vehicle according to claim 1, characterised in that the horizontal radial bearing (14) is provided staggered in view of the middle axis (3) in the direction towards the front axle (1).

5. Self propelling tractor vehicle according to claim 1, characterised in that instead of a single, steered, middle front wheel (2) the front axle (1) is provided with two steerable outer wheels (2, 2), and that the middle axis is a rigid axis.

6. Self propelling tractor vehicle according to one of the preceeding claims, characterised in that the height of the central tubular frame (12) is smaller than the height of the vehicle wheels (4, 5, 7, 8).

7. Self propelling tractor vehicle according to one of the preceeding claims, characterised in that the mechanical drive means (20) is constructed as a mechanical universal shaft between the middle axle (3) and the rear axle (6).

8. Self propelling tractor vehicle according to claim 1, characterised in that the middle axle (3) is a swinging axle and the rear axle is a rigid axle.

9. Self propelling agricultural tractor vehicle with three axles the front axle (31) of which is provided with a central, steered wheel (32), the middle axle (33) is provided with two wheels (34, 35) and the rear axle (36) is provided with two wheels (37, 38), whereby the wheels have superwide tires and the width of the vehicle is substantially equal to three times the width of one tire, whereby the front wheel (32) is designed as a steered wheel and can be rotated about 90° maximum to the left and to the right, the steered wheel (32) is supported one sided in a rocker arm (40), and the vehicle frame (42) has a width in the area of the middle and the rear axle (33, 36), which is substantially smaller than the distance of the two middle wheels or rear wheels from each other, and whereby the rear axle (36) and the middle axle (33) each are provided with steered wheels (37, 38, 34, 35),
characterised in that
(a) the rear axle (36) and the middle axle (33) are coupled with each other by mechanical drive means (43),
(b) the frame (39) is designed continuously as a rigid frame, and
(c) middle axle and rear axle together are supported on the equipment supporting frame (42), which are pivotable relative to each other by means of a radial bearing (44).

10. Self propelling tractor vehicle according to claim 9, characterised in that the radial bearing (44) is arranged within the mechanical connection (43) between the middle and the rear axle (33, 36) and is mounted to the equipment supporting frame (42) by means of a bearing bracket (45), and that the middle and the rear axle (33, 36) are pivotably supported on said frame (42) relative to each other by means of the radial bearing (44).

11. Self propelling tractor vehicle according to claim 9, characterised in that the wheels (34, 35, 37, 38) of the middle axle (33) and the rear axle (36) are arranged so that they can be diagonally balanced, f.e. are swingably arranged.

## Revendications

1. Tracteur agricole automoteur à trois essieux dont l'essieu avant (1) supporte une roue centrale dirigée (2), dont l'essieu intermédiaire (3) supporte deux roues (4, 5) et dont l'essieu arrière (6) supporte deux roues (7, 8), lesdites roues (2; 4, 5; 7, 8) étant garnies de pneus extra-larges et la largeur du véhicule étant plus ou moins égale à trois fois la largeur d'un pneu, la roue avant (2) étant conçue comme une roue dirigée et étant disposée de manière à tourner de maximum 90° vers la gauche et vers la droite par rapport à l'axe longitudinal du véhicule, la roue dirigée (2) étant logée par un côté dans un bras articulé (9), et le châssis (9, 12) du véhicule présentant, dans la zone de l'essieu intermédiaire et de l'essieu arrière (3, 6) une largeur beaucoup plus petite que la distance séparant les deux roues intermédiaires respectivement les roues arrières (3-4, 7-8), l'essieu arrière (6) présentant deux roues dirigées (7, 8) et l'essieu intermédiaire (3) présentant deux roues dirigées ou facultativement deux roues fixes (4, 5) garnies de pneus extra-larges, **caractérisé en ce que**
a) l'essieu arrière (6) et l'essieu intermédiaire (3) sont accouplés l'un à l'autre par l'intermédiaire d'une commande mécanique (20);
b) un porte-outils (12) formé d'un tube central s'étendant en continu depuis un point avant les roues intermédiaires (4, 5) jusqu'au delà des roues arrières (7, 8);
c) le porte-outils (12) étant relié à l'essieu intermédiaire au moyen d'un palier transversal (14) horizontal de manière à pouvoir pivoter; et
d) le palier transversal horizontal (14) étant disposé au-dessus de l'essieu intermédiaire et relié fixement avec le porte-outils (12).

2. Tracteur automoteur selon la revendication 1, caractérisé en ce que le porte-outils (12) est disposé de manière à pouvoir basculer par rapport à l'essieu arrière au moyen d'un pivot longitudinal horizontal (17).

3. Tracteur automoteur selon la revendication 1, caractérisé en ce que le porte-outils (12) est relié fixement avec l'essieu arrière (6).

4. Tracteur automoteur selon la revendication 1, caractérisé en ce que le palier transversal horizontal (14) est décalé par rapport à l'essieu intermédiaire (3) dans la direction de l'essieu avant (1).

5. Tracteur automoteur selon la revendication 1, caractérisé en ce que l'essieu avant (1) présente, à la place d'une seule roue centrale dirigée (2) deux roues dirigeables (2, 2) et en ce que l'essieu médian est rigide.

6. Tracteur automoteur selon l'une ou l'autre des revendications précédentes, caractérisé en ce que la hauteur du porte-outils (12) formé d'un tube central est inférieure à celle des roues du véhicule (4, 5, 7, 8).

7. Tracteur automoteur selon l'une ou l'autre des revendications précédentes, caractérisé en ce que la connexion de commande mécanique (20) est placée entre l'essieu intermédiaire (3) et l'essieu arrière (6) comme un arbre de transmission mécanique.

8. Tracteur automoteur selon la revendication 1, caractérisé en ce que l'essieu médian (3) est flottant et l'essieu arrière rigide.

9. Tracteur agricole automoteur à trois essieux dont l'essieu avant (31) supporte une roue centrale dirigée (32), dont l'essieu intermédiaire (33) supporte deux roues (34, 35) et dont l'essieu arrière (36) supporte deux roues (37, 38), lesdites roues étant garnies de pneus extra-larges et la largeur du véhicule étant plus ou moins égale à trois fois la largeur d'un pneu, la roue avant (32) étant conçue comme une roue dirigée et étant disposée de manière à tourner de maximum 90° vers la gauche et vers la droite par rapport à l'axe longitudinal du véhicule, la roue dirigée (32) étant logée par un côté sur un bras articulé (40), et le châssis (42) du véhicule présentant, dans la zone de l'essieu intermédiaire et de l'essieu arrière (33, 36) une largeur beaucoup plus petite que la distance séparant les deux roues intermédiaires respectivement les roues arrières l'essieu arrière (36) et l'essieu intermédiaire (33) présentant chacun des roues dirigées (37, 38, 34, 35), caractérisé, en ce que
a) l'essieu arrière (36) et l'essieu intermédiaire (33) sont accouplés l'un avec l'autre au moyen d'une transmission mécanique (43),
b) le châssis (39) est rigide sur toute sa longueur, et
c) l'essieu intermédiaire et l'essieu arrière sont montés ensemble sur le porte-outils (42) de manière à pouvoir pivoter l'un par rapport à l'autre par l'intermédiaire d'un) palier transversal horizontal (44, 48).

10. Tracteur automoteur selon la revendication 9, caractérisé en ce que le palier transversal (44) est situé dans la transmission mécanique (43) entre l'essieu intermédiaire et l'essieu arrière (33, 36) et est fixé au porte-outils (42) par le biais d'un support (45) et en ce que l'essieu intermédiaire et l'essieu arrière (33, 36) sont montés sur le porte-outils (42) de manière à pouvoir pivoter l'un par rapport à l'autre.

11. Tracteur automoteur selon la revendication 9, caractérisé en ce que le roues (34, 35, 37, 38) de l'essieu intermédiaire (33) et de l'essieu arrière (36) sont montées de manière, par exemple de manière flottante, avec une compensation diagonale.
